# EUROPEAN PATENT APPLICATION

(11) **EP 4 696 907 A1**
(43) Date of publication of application: **18.02.2026**
(21) Application number: 24788135.2
(22) Date of filing: 11.04.2024
(51) Int. Cl.: F16K 5/04

(54) **VALVE DEVICE**

(30) Priority: 13.04.2023 CN 202310412201; 13.04.2023 CN 202310438824; 13.04.2023 CN 202310412025
(71) Applicant: Zhejiang Sanhua Automotive Components Co., Ltd., Hangzhou, Zhejiang 310018 (CN)
(72) Inventor: LAN, Yunzhi, Hangzhou, Zhejiang 310018 (CN); CHENG, Haotian, Hangzhou, Zhejiang 310018 (CN); NI, Naixu, Hangzhou, Zhejiang 310018 (CN); HONG, Shengjie, Hangzhou, Zhejiang 310018 (CN)
(74) Representative: Maikowski & Ninnemann Patentanwälte Partnerschaft mbB
(86) International application number: PCT/CN2024/087180
(87) International publication number: WO 2024/213033

(57) **Abstract**

A valve device, comprising a sealing assembly (6), a valve core (4), and a valve body (5). The valve body (5) is provided with a valve cavity (51), a first communication port (52), and a second communication port (53); the valve core (4) is provided with a channel (42); at least part of the valve core (4) is located in the valve cavity (51); the valve core (4) can rotate relative to the valve body (5), such that the channel (42) can be communicated with the first communication port (52) and the second communication port (53); the sealing assembly (6) and the valve body (5) are connected fixedly or in a limited manner; the bottom wall of the valve core (4) abuts against the sealing assembly (6); a limiting portion for limiting a rotating angle of the valve core (4) is provided on the sealing assembly (6); and the sealing assembly (6) and the valve body (5) are connected fixedly or in a limited manner. Compared with machining the limiting portion in a valve body, the machining difficulty of the valve device is lowered.

## Description

The present application claims priorities to following Chinese Patent Applications, which are incorporated herein by reference in there entireties:
1) Chinese Patent Application No. 202310412025.1, titled "ELECTRIC VALVE AND ASSEMBLY METHOD", filed with the China National Intellectual Property Administration on April 13, 2023;
2) Chinese Patent Application No. 202310412201.1, titled "VALVE DEVICE", filed with the China National Intellectual Property Administration on April 13, 2023; and
3) Chinese Patent Application No. 202310438824.6, titled "ELECTRIC VALVE", filed with the China National Intellectual Property Administration on April 13, 2023.

### FIELD

The present application relates to the technical field of fluid control, and in particular to a valve device.

### BACKGROUND

It is necessary to machine a position-limiting part in the valve body of the valve device to limit a rotation angle of the valve core. Due to the space constraint of the valve chamber inside the valve body, however, the machining of the position-limiting part is relatively difficult.

### SUMMARY

An object of the present application is to provide a valve device, which reduces the difficulty of machining the valve device.

A valve device is disclosed in an embodiment of the present application, including a sealing assembly, a valve core and a valve body. The valve body has a valve chamber, a first communication port and a second communication port. The valve core has a channel, at least a portion of the valve core is located in the valve chamber, and the valve core is rotatable relative to the valve body, so that the channel is communicated with the first communication port and the second communication port.

The sealing assembly is connected to the valve body in a fixed manner or in a position-limited manner, and a bottom wall of the valve core abuts against the sealing assembly. The sealing assembly has a through-hole, which is communicated with the second communication port. The sealing assembly includes a first position-limiting part and a second position-limiting part, and the valve core includes a first matching part. The first matching part is configured to abut against the first position-limiting part when the valve core is in a first position, and abut against the second position-limiting part when the valve core is in a second position.

In the valve device provided according to an embodiment of the present application, the position-limiting part for limiting the rotation angle of the valve core is arranged on the sealing assembly of the valve device, and the sealing assembly is connected to the valve body in a fixed manner or in a position-limited manner, which is convenient to reduce the difficulty of machining the valve device, compared with machining the position-limiting part in the valve body.

### BRIEF DESCRIPTION OF THE DRAWINGS

FIG. 1 is a schematic view of an overall internal structure of an electric valve according to an embodiment of the present application;
FIG. 2 is a schematic structural view of the electric valve shown in FIG. 1 when a driving assembly is hidden;
FIG. 3 is a schematic cross-sectional structural view of a valve assembly and a valve core of an electric valve according to an embodiment of the present application at one position;
FIG. 4 is a cross-sectional view of a valve body of an electric valve according to an embodiment of the present application at one position;
FIG. 5 is a schematic structural view of a connecting seat of an electric valve according to an embodiment of the present application;
FIG. 6 is a schematic cross-sectional structural view of a valve body of an electric valve according to an embodiment of the present application at another position;
FIG. 7 is a schematic structural view of a first position-limiting part and a second position-limiting part of a sealing assembly of an electric valve according to an embodiment of the present application;
FIG. 8 is a schematic structural view of a first position-limiting part and a second position-limiting part of a sealing assembly and a first matching part of an electric valve according to another embodiment of the present application;
FIG. 9 is a schematic structural view of a notch of a sealing assembly according to an embodiment of the present application;
FIG. 10 is a schematic structural view of a sealing assembly and a sealing member according to an embodiment of the present application;
FIG. 11 is a schematic structural view showing a first position and a second position according to an embodiment of the present application;
FIG. 12 is a schematic structural view of a valve core disc of a valve device according to an embodiment of the present application;
FIG. 13 is a schematic view showing an intermediate state of an electric valve according to an embodiment of the present application during assembly;
FIG. 14 is a schematic view showing an intermediate state of an electric valve according to another embodiment of the present application during assembly;
FIG. 15 is a schematic cross-sectional view of FIG. 14 taken along line C-C;
FIG. 16 is a schematic structural view of a first position-limiting part and a second position-limiting part of an electric valve according to an embodiment of the present application;
FIG. 17 is a schematic structural view of an electric valve with an anti-rotation member according to an embodiment of the present application;
FIG. 18 is a schematic structural view of an anti-rotation member according to an embodiment of the present application;
FIG. 19 is a schematic structural view of a sealing gasket according to an embodiment of the present application;
FIG. 20 is a schematic structural view of a transmission assembly of an electric valve according to an embodiment of the present application;
FIG. 21 is an enlarged schematic view of part A in FIG. 2;
FIG. 22 is an enlarged schematic view of part B in FIG. 2;
FIG. 23 is a schematic structural view of a valve stem and a fixed ring gear of an electric valve according to an embodiment of the present application;
FIG. 24 is a cross-sectional view of a valve stem of an electric valve according to an embodiment of the present application at one position;
FIG. 25 is a schematic structural view of a balancing hole of a valve stem of an electric valve according to an embodiment of the present application;
FIG. 26 is a schematic structural view of two kinds of bearings of an electric valve according to an embodiment of the present application.

Reference numerals of the components in the drawings are as follows:
1 driving assembly; 11 stator assembly; 2 valve assembly; 20 sleeve; 200 accommodation cavity; 21 rotor assembly; 22 rotor; 23 fixing member; 24 transmission assembly; 25 sun gear; 26 planetary gear train; 261 planetary carrier; 262 planetary shaft; 263 planetary gear; 27 fixed ring gear; 270 transmission cavity; 28 connecting seat; 280 mounting cavity; 281 pressing part; 282 second matching part; 2821 first position-limiting part; 283 sealing part; 2831 abutment part; 29 pressing member; 3 valve core assembly; 30 valve stem; 301 position-limiting part; 302 third matching part; 303 balancing hole; 304 stepped part; 31 bearing; 311 first component; 312 second component; 313 transmission component; D1 first abutment part; D2 second abutment part; 33 sealing gasket; 331 inner ring part; 332 outer ring part; 333 sloped part; 4 valve core; 40 valve core body; 400 valve core chamber; 401 communication hole; 402 mounting hole; 410 abutment part; 41 valve core disc; 411 bore channel; 411a first bore channel; 411b second bore channel; 412 stepped surface; 413 mounting section; 42 channel; 43 first matching part; 43' matching cavity; 431 first matching wall; 432 second matching wall; 5 valve body; 51 valve chamber; 52 first communication port; 53 second communication port; P1 first-second communication port; P2 second-second communication port; 531 axial hole; 532 radial hole; 55 accommodation cavity; 551 second position-limiting part; 552 centering cavity; 553 specially-shaped cavity; 57 stepped part; 58 position-limiting hole; 6 sealing assembly; 60 sealing body; 601 position-limiting cavity; 601a first end wall; 601b second end wall; 61 accommodation cavity; 62 sealing member; 621 sealing seat; 622 sealing ring; 623 connector; 63 notch; 63' position-limiting member; 631 first position-limiting part; 632 second position-limiting part; 64 positioning hole; 65 positioning pin; 66 through-hole; 66a first through-hole; 66b second through-hole; 7 position-limiting member; 70 groove; 71 elastic part; 72 anti-rotation member; 721 specially-shaped part; 722 crimping part; S1 first surface; S2 second surface; S3 third surface; G1 first gap; G2 second gap.

### DETAILED DESCRIPTION OF THE EMBODIMENTS

The features and exemplary embodiments of various aspects of the present application will be described below. In order to make the objects, technical solutions and advantages of the present application more clear and apparent, the present application will be described in detail below in conjunction with the accompanying drawings and specific embodiments. Moreover, relational terms such as "first" and "second" and the like are only used to distinguish one component from another having the same name, and do not necessarily require or imply any such actual existence of relationship or order between these components.

A valve device is provided according to an embodiment of the present application, and it may be an electric valve or other types of valve devices. The electric valve is taken as an example for description below. The electric valve may be applied in a vehicle thermal management system or an air conditioning system, particularly in a refrigerant circulation circuit of a vehicle. Specifically, the electric valve may be configured to control the on-off of a flow path in the refrigerant circulation circuit and/or adjust the flow rate of the refrigerant.

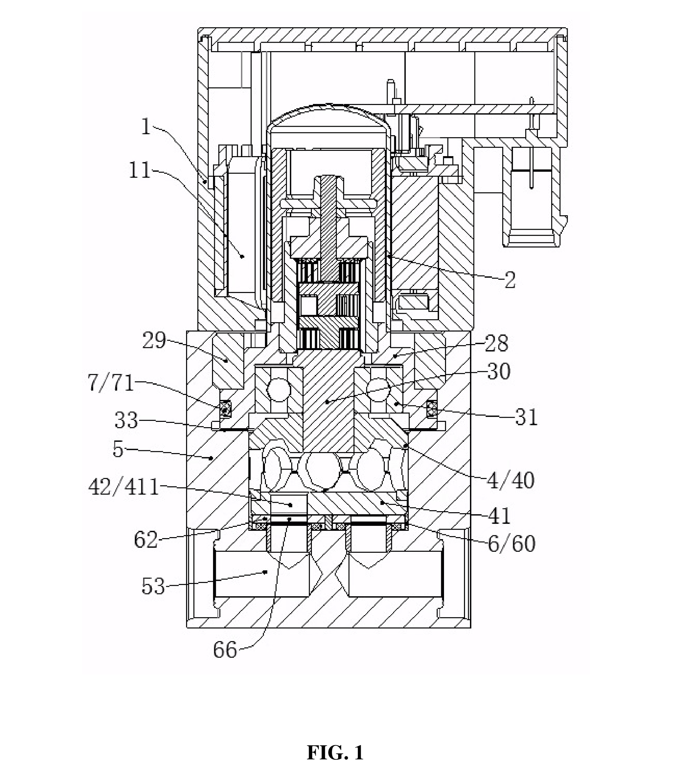

Specifically, as shown in FIGS. 1 to 4, the electric valve includes a driving assembly 1, a valve assembly 2, a valve core 4 and a valve body 5. The valve body 5 has a valve chamber 51, a first communication port 52 and a second communication port 53. In this embodiment, there are two second communication ports 53, namely, a first-second communication port P1 and a second-second communication port P2. Walls forming the valve chamber 51 include a bottom wall and a side wall. The first communication port 52 is located on the side wall, and the second communication port 53 is located on the bottom wall. The valve core 4 has a channel 42. At least a portion of the valve core 4 is located in the valve chamber 51. The valve core 4 is rotatable relative to the valve body 5, enabling the channel 42 to be communicated with the first communication port 52 and the second communication port 53. The valve assembly 2 is in a transmission connection with the valve core 4 via a valve stem 30. The valve assembly 2 is connected to the valve body 5 in a fixed manner or in a position-limited manner. The driving assembly 1 includes a stator assembly 11, which is located around an outer periphery of the valve assembly 2. The driving assembly 1 is connected to the valve assembly 2 in a fixed manner or in a position-limited manner.

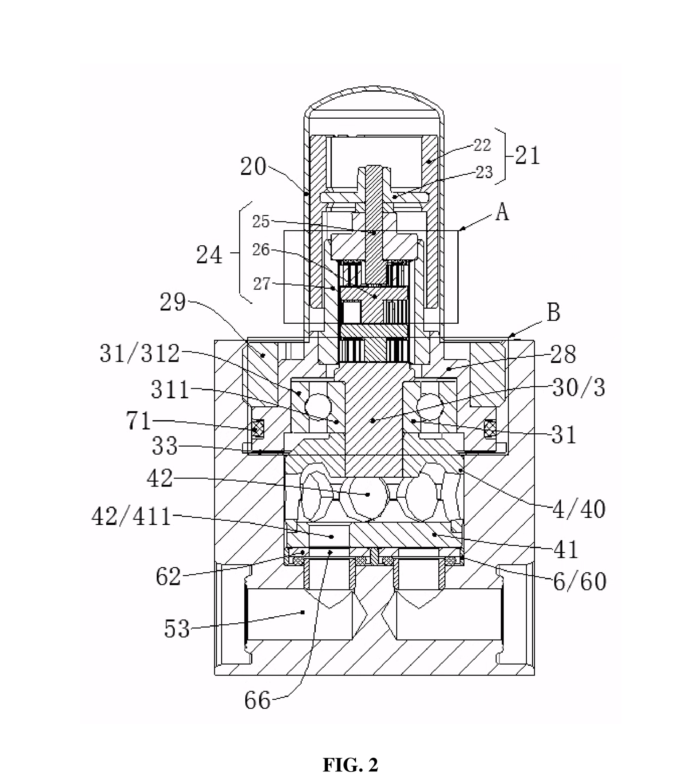

Referring to FIGS. 1 and 2, the valve assembly 2 includes a sleeve 20, a rotor assembly 21, a transmission assembly 24, a connecting seat 28 and a pressing member 29. The sleeve 20 is fixedly connected to the connecting seat 28. In this embodiment, the sleeve 20 is fixed to the connecting seat 28 by welding. The sleeve 20 and the connecting seat 28 are assembled to form an accommodation cavity 200, in which the rotor assembly 21 and at least a portion of the transmission assembly 24 are located. In this embodiment, a portion of the transmission assembly 24 is located in a rotor chamber formed by the rotor assembly 21. This configuration facilitates a reduction in an axial height of the valve assembly 2, enabling a compact arrangement of the rotor assembly 21 and the transmission assembly 24, and then facilitates a reduction in overall dimensions of the electric valve.

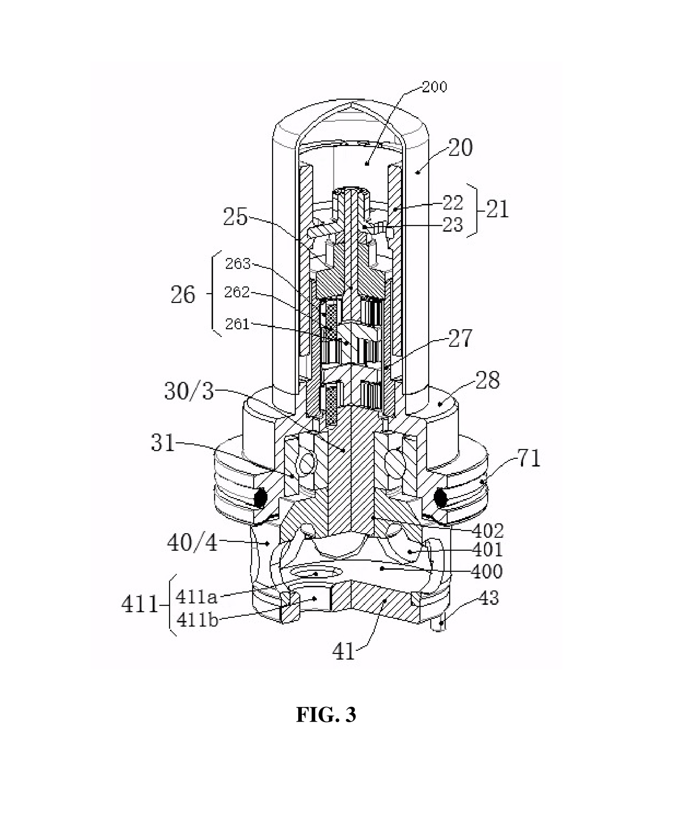

Referring to FIGS. 2 and 3, the rotor assembly 21 includes a rotor 22 and a fixing member 23. The transmission assembly 24 includes a sun gear 25, a planetary gear train 26 and a fixed ring gear 27. The transmission assembly 24 may include multiple stages of planetary gear trains to meet transmission ratio requirements. In this embodiment, in an axial direction of the transmission assembly, the planetary gear train 26 includes a first planetary gear train, a second planetary gear train and an output gear train in sequence. The sun gear 25 is entirely located in the rotor chamber formed by the rotor assembly 21. The rotor 22 is connected to the fixing member 23 in a fixed manner or in a position-limited manner, and the fixing member 23 is connected to the sun gear 25 in a fixed manner or in a position-limited manner. In this embodiment, the fixing member 23 is fixed to the sun gear 25 by interference fit. The fixed ring gear 27 is located on at least a portion of an outer periphery of the sun gear 25 and at least a portion of an outer periphery of the planetary gear train 26. The fixed ring gear 27 is connected to the connecting seat 28 in a fixed manner or in a position-limited manner, and the fixed ring gear 27 is connected to the fixing member 23 in a fixed manner or in a position-limited manner. The sun gear 25 is in gear mesh with the planetary gear train 26, which in turn is in gear mesh with the fixed ring gear 27.

Specifically, the sun gear 25 is in gear mesh with the first planetary gear train, the second planetary gear train is in gear mesh with the output gear train, and the first planetary gear train, the second planetary gear train and the output gear train are all in gear mesh with the fixed ring gear. For a single stage of planetary gear train 26, the planetary gear train 26 includes a planetary carrier 261, a planetary shaft 262 and a planetary gear 263. An end of the sun gear 25 abuts against an upper surface of the planetary carrier 261 of the first planetary gear train, a lower end face of the planetary carrier of the first planetary gear train abuts against an upper surface of a planetary carrier of the second planetary gear train, and a lower end face of the planetary carrier of the second planetary gear train abuts against an upper surface of a planetary carrier of the output gear train, which facilitates reducing an axial dimension of a rotating shaft on which the sun gear 25 is located. When the rotating shaft is short, its oscillation is easy to control, thereby minimizing the risk of motor rotor oscillation. In addition, by eliminating the central shaft in the planetary gear train, friction between the planetary carrier and the central shaft is eliminated, thereby reducing noise and simplifying assembly steps. In this way, under the magnetic field excitation of the stator assembly 11, the rotor assembly 21 may drive the sun gear 25 to rotate. After transmission through the multiple stages of planetary gear trains 26, the sun gear 25 drives the valve stem 30 to rotate via the planetary carrier of the output gear train (in this embodiment, the planetary carrier of the output gear train is integrally formed with the valve stem 30). The valve stem 30 is in a transmission connection with the valve core 4, and the valve stem 30 finally drives the valve core 4 to rotate relative to the valve body 5.

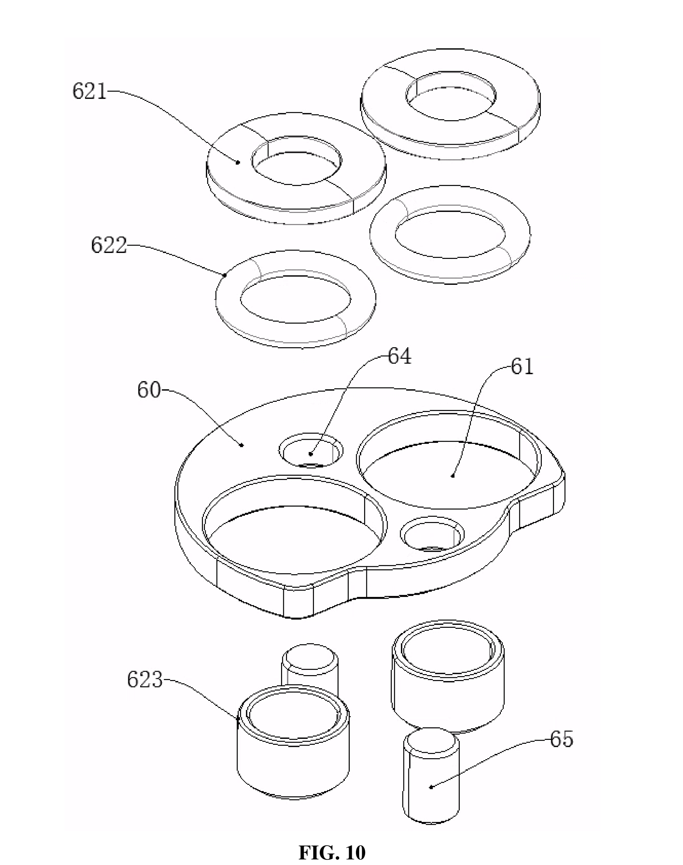

Referring to FIGS. 1, 2, 10 and 11, a sealing assembly 6 is mounted on the bottom wall of the valve chamber 51 in a fixed manner or in a position-limited manner, and a bottom wall of the valve core 4 abuts against the sealing assembly 6. The sealing assembly 6 has a through-hole 66, which is communicated with the second communication port 53. The sealing assembly 6 includes a first position-limiting part 631 and a second position-limiting part 632, and the valve core 4 includes a first matching part 43. The first matching part 43 is configured to abut against the first position-limiting part 631 when the valve core 4 is in a first position, and abut against the second position-limiting part 632 when the valve core 4 is in a second position. Through the above arrangement, the rotation angle of the valve core may be limited by the sealing assembly 6, and the sealing assembly is connected to the valve body in a fixed manner or in a position-limited manner, which reduces the difficulty of machining the valve device, compared with machining the position-limiting part in the valve body.

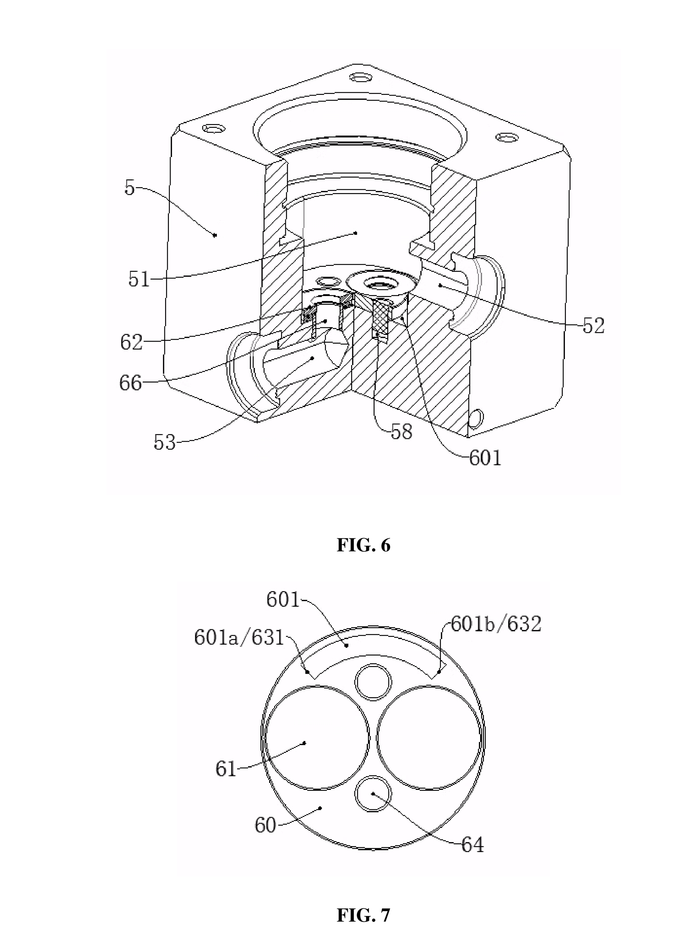

Referring to FIG. 6 and FIG. 7, the electric valve includes the sealing assembly 6. In a first embodiment, the electric valve has a position-limiting cavity 601, which is recessed relative to a top wall of the sealing assembly 6. Walls forming the position-limiting cavity 601 include a first end wall 601a and a second end wall 601b, which are located in the sealing assembly 6. The first position-limiting part 631 is located at the first end wall 601a, and the second position-limiting part 632 is located at the second end wall 601b. The first matching part 43 protrudes relative to the bottom wall of the valve core 4, so as to abut against the first position-limiting part 631 or the second position-limiting part 632 during the rotation of the valve core 4, thereby facilitating the restriction of the rotation angle of the valve core 4. In this embodiment, the position-limiting cavity 601 is arc-shaped, with two planar walls in the arc direction of the position-limiting cavity 601 configured as the first end wall 601a and the second end wall 601b. The first matching part 43 moves in the position-limiting cavity 601, and the two planar walls are two ends of the stroke of the first matching part 43.

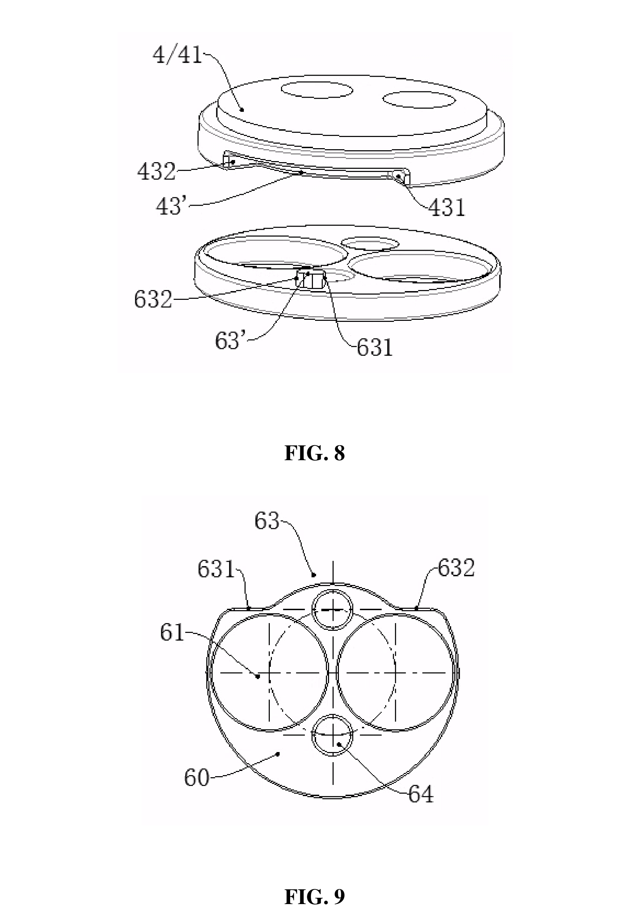

Furthermore, for the convenience of machining, referring to FIG. 6 and FIG. 9, in the first embodiment, the position of the position-limiting cavity 601 is further limited. The position-limiting cavity 601 is limited at an edge of the sealing assembly 6, so that the sealing assembly 6 has a notch 63, and the walls forming the position-limiting cavity 601 comprise a side wall of the valve chamber 51 and the notch 63. The first position-limiting part 631 and the second position-limiting part 632 are located at two end faces of the notch 63, respectively. The first matching part 43 is a limiting pin, which is connected to the valve core 4 in a fixed manner or in a position-limited manner. This configuration not only facilitates machining of the first position-limiting part 631 and the second position-limiting part 632, but also reserves a sufficient space for the arrangement of other components of the sealing assembly 6.

Reference is made to FIG. 8, which shows a second embodiment of the present application. The sealing assembly 6 includes a position-limiting member 63', which protrudes from the top wall of the sealing assembly 6. The position-limiting member 63' includes a first position-limiting part 631 and a second position-limiting part 632. The first matching part 43 has a matching cavity 43', which is recessed relative to a portion of the bottom wall of the valve core 4. Walls forming the matching cavity 43' include a first matching wall 431 and a second matching wall 432. The first matching wall 431 is configured to abut against the first position-limiting part 631 when the valve core 4 is in the first position, and the second matching wall 432 is configured to abut against the second position-limiting part 632 when the valve core 4 is in the second position, thereby facilitating the restriction of the rotation angle of the valve core 4. Compared with machining the position-limiting part in the valve body, the difficulty of machining the valve device is reduced herein. In this embodiment, the position-limiting member 63' is trapezoidal in shape, with the first position-limiting part 631 and the second position-limiting part 632 located on two oblique sides of the trapezoid, respectively.

In the above-mentioned first and second embodiments, the first matching part 43 protruding from the bottom wall of the valve core 4 and/or the position-limiting member 63' protruding from the top wall of the sealing assembly may be separate components, such as limiting pins, and may be connected to the valve core 4 or the sealing assembly 6 in a fixed manner or a position-limited manner, respectively. Alternatively, the first matching part 43 and/or the position-limiting member 63' may be integrally formed with the valve core 4 or the sealing assembly 6.

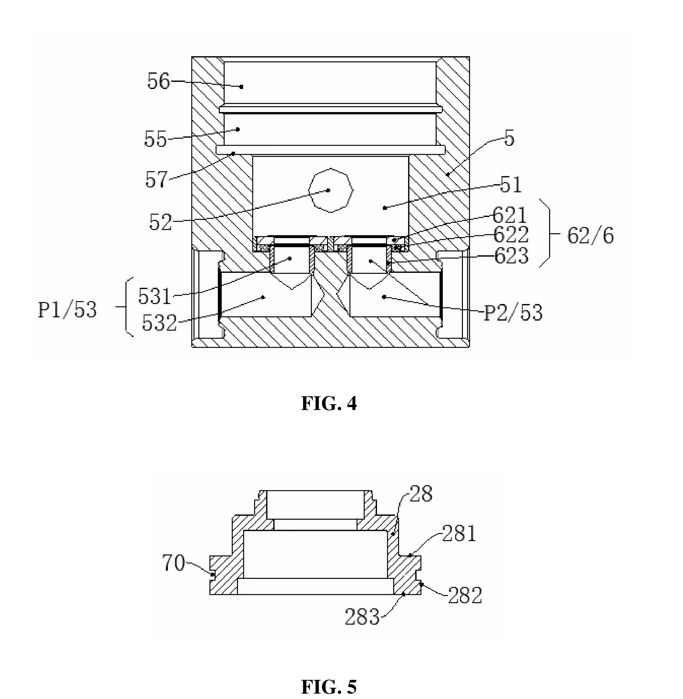

Referring to FIG. 4 and FIGS. 6 to 10, in some embodiments, the sealing assembly 6 includes a sealing body 60 and a sealing member 62. The first position-limiting part 631 and a second position-limiting part 632 are located on the sealing body 60, and the sealing body 60 has an accommodation cavity 61, in which the sealing member 62 is located. One side wall of the sealing member 62 abuts against the bottom wall of the valve core 4, and the other side wall of the sealing member 62 abuts against the bottom wall forming the valve chamber 51. The sealing member 62 has a through-hole 66. Specifically, the sealing member 62 achieves the sealing at abutment surfaces of the sealing body 60 and the bottom wall forming the valve chamber 51, thereby preventing high-pressure fluid in one of the second communication ports 53 form passing through the abutment surfaces of the sealing body 60 and the bottom wall forming the valve chamber 51 and entering another one of the second communication ports 53. The sealing member 62 also achieves the sealing at abutment surfaces of the sealing body 60 and the bottom wall of the valve core 4, thereby preventing high-pressure fluid in one of the second communication ports 53 from passing through the abutment surfaces of the sealing body 60 and the bottom wall of the valve core 4 and entering another one of the second communication ports 53.

Specifically, in order to prolong the service life of the sealing member, in some embodiments, referring to FIGS. 4 and 6, the sealing member 62 includes a sealing seat 621 and a sealing ring 622. At least a portion of the sealing seat 621 is located in the accommodation cavity 61, and the sealing seat 621 abuts against the bottom wall of the valve core 4. One side wall of the sealing ring 622 abuts against a bottom wall of the sealing seat 621, and the other side wall of the sealing ring 622 abuts against the bottom wall forming the valve chamber 51. Specifically, an abutment surface of the sealing seat 621 abutting against the bottom wall of the valve core 4 is a curved surface that protrudes towards the valve core 4, with a protrusion extending out of an upper surface of the sealing assembly 6. In this way, when the valve core 4 moves axially under the action of high-pressure fluid, it can be ensured that the sealing seat 621 remains in abutment with the bottom wall of the valve core 4, thereby ensuring the sealing performance of the sealing seat 621. In addition, during the rotation of the valve core 4, friction occurs between the sealing seat 621 and the bottom wall of the valve core 4. Therefore, the sealing seat 621 and the sealing ring 622 are made of different materials. The sealing seat 621 needs to have a certain wear resistance, and the sealing ring 622 should have a higher elastic coefficient than the sealing seat 621. In this way, the service life of the sealing member can be ensured without compromising its sealing performance.

Referring to FIG. 4, the second communication port 53 includes an axial hole 531 and a radial hole 532. The axial hole 531 is located in the bottom wall forming the valve chamber 51. The axial hole 531 is communicated with the through-hole 66. An axis of the axial hole 531 is coincided or substantially coincided with an axis of the through-hole 66. The radial hole 532 is located on a side surface of the bottom of the valve body 5. The radial hole 532 is communicated with the axial hole 531. An axis of the radial hole 532 is perpendicular or substantially perpendicular to the axis of the axial hole 531. This configuration facilitates the design of the second communication port 53 with a complex structure and enables reasonable arrangement of the second communication port 53. In some embodiments, there are two second communication ports 53, and accordingly, the sealing assembly 6 has two through-holes 66, which are communicated with the first-second communication port P1 and the second-second communication port P2, respectively.

Furthermore, in order to ensure better sealing performance of the sealing member 62, the sealing member 62 further includes a connector 623. At least a portion of the connector 623 is located in the axial hole 531, and at least a portion of the connector 623 is located in the accommodation cavity 61. The sealing ring 622 is located on an outer periphery side of the connector 623, and the connector 623 is in an interference fit with the axial hole 531. Additionally, there is a gap between a surface of the connector 623 facing the valve core 4 and the bottom wall of the sealing seat 621. With the above arrangement, when a portion of the fluid flowing through the electric valve flows into the valve chamber 51, the portion of the fluid presses the sealing ring 622 through the above gap, causing the sealing ring 622 to be deformed more in the axial direction of the electric valve under force. As a result, the sealing seat 621 is more tightly abutted against the valve core 4, which mitigates the situation of fluid leakage between the sealing seat 621 and the valve core 4, enhancing the sealing performance of the electric valve.

It can be seen that due to the constraints of the operating environment and for the convenience of connecting to an external pipeline, the electric valve according to this embodiment needs to have a connection port provided on the side surface of the valve body for connecting to other pipelines in the system. For the electric valve with the connection port located at the bottom, it is impossible to machine the axial hole 531 or the accommodation cavity 61 by inserting a tool through the connection port located at the bottom. Instead, the tool can only be inserted into the valve body 5 from the valve chamber 51 to machine the sealing part at the bottom wall forming the valve chamber 51 and the axial hole 531, resulting in higher machining difficulty. Therefore, in this embodiment, the end wall of the valve chamber 51 is separated from the sealing assembly 6, and the sealing assembly 6 is machined separately, so as to address the issue of high machining difficulty for the valve chamber of such electric valves. Furthermore, unlike the conventional solution where a protruding structure same as the connector 623 in this embodiment is directly machined on the bottom wall forming the valve chamber 51, in this embodiment, such structure is machined separately. By separately machining the connector 623 and then mounting the connector 623, the machining becomes easier without affecting the sealing performance.

Referring to FGS. 6 and 10, the sealing assembly 6 is provided with two positioning holes 64, and two position-limiting holes 58 are provided in the bottom wall forming the valve chamber 51. The sealing assembly 6 includes positioning pins 65, and the sealing assembly 6 is connected to the end wall of the valve chamber 51 in a position-limited manner via the positioning pins 65 and the position-limiting holes 58. In this embodiment, the connection between the sealing assembly 6 and the valve body 5 is achieved by the positioning pins 65, but it is not limited to the above limited connection. Alternatively, a protrusion or recess may be directly machined on the sealing body 60 to enable a position-limited connection with the valve body 5. In this embodiment, the connection between the sealing assembly 6 and the valve body 5 is achieved by the positioning pins 65, which can simplify the machining and assembly processes of the sealing assembly 6 while ensuring accurate positioning.

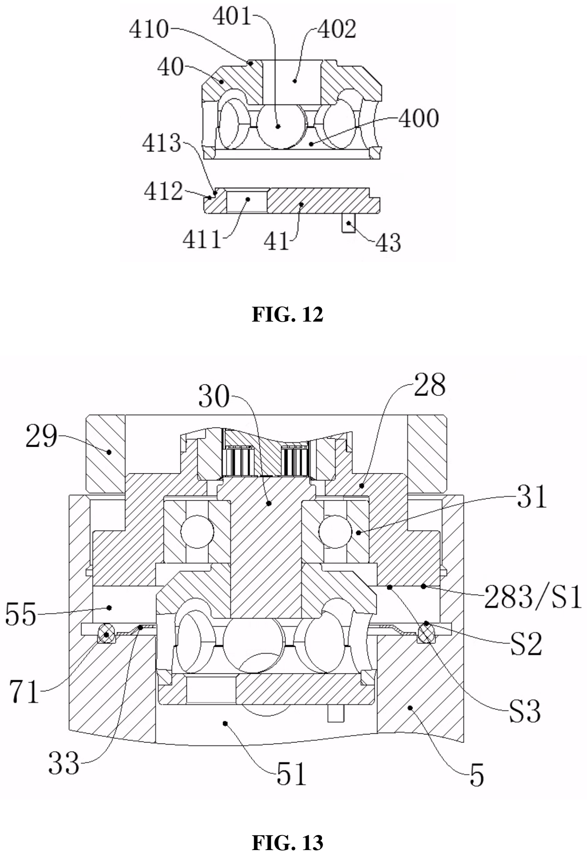

Referring to FIG. 12, in addition to integral molding of the valve core 4, in some embodiments of the present application, the valve core 4 includes a valve core body 40 and a valve core disc 41. The valve core body 40 has a valve core chamber 400, and multiple communication holes 401 are provided in a circumferential side wall of the valve core chamber 400. The communication holes 401 are communicated with the first communication port 52 and the valve core chamber 400. There is a mounting hole 402 at a top of the valve core chamber 400. The valve stem 30 is at least partially located in the mounting hole 402. In this embodiment, the valve stem 30 is in an interference fit with the mounting hole 402. The valve core disc 41 is connected to a bottom end of the valve core body 40 in a fixed manner or a position-limited manner. Specifically, the valve core disc 41 has a stepped surface 412 and a mounting section 413. The mounting section 413 is configured to extend into the valve core chamber 400 and engage with the side wall forming the valve core chamber 400 for limiting the position. The stepped surface 412 comes into contact with a lower end face of the valve core body 40 and is welded thereto. The valve core disc 41 has a bore channel 411, and an axis of the bore channel 411 is parallel or substantially parallel to a rotation axis of the valve core 4. By controlling the rotation of the valve core 4, the bore channel 411 is or is not communicated with the through-hole 66 in the sealing assembly 6. By dividing the valve core 4 into the valve core body 40 and the valve core disc 41, the valve core disc 41 may be machined and heat-treated separately. Positioned at the bottom end of the valve core 4, the valve core disc 41 generally is pressed against, repeatedly rotated with and rubbed against the end wall of the valve chamber 51. In this embodiment, the valve core disc 41 is pressed against, repeatedly rotated with and rubbed against the sealing assembly 6, which means the valve core disc 41 requires certain hardness and wear resistance. Heat-treating the valve core disc 41 separately is less costly than conventional heat-treating of the entire valve core.

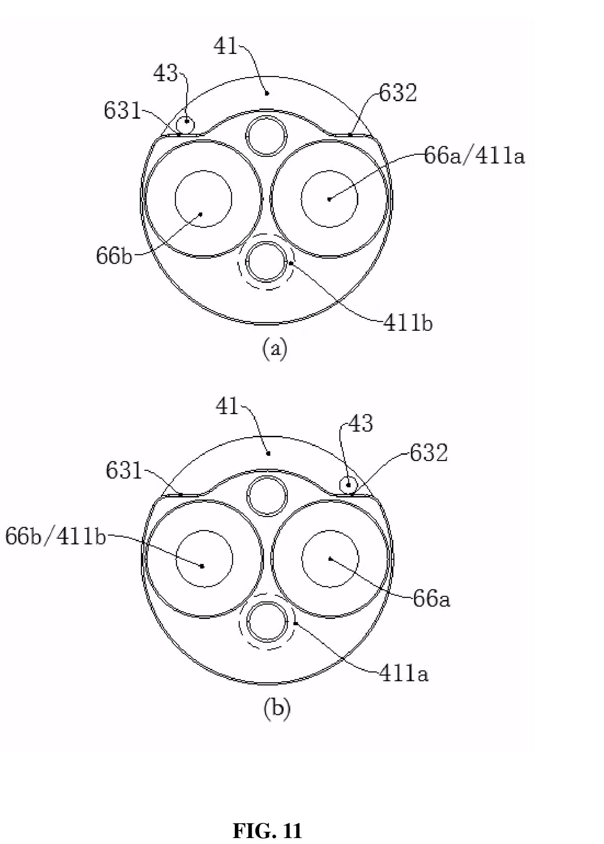

Referring to FIGS. 9 to 11, the notch 63 of the sealing assembly 6 has a first position-limiting part 631 and a second position-limiting part 632, which are configured to limit the stroke of the first matching part 43. The sealing assembly 6 has two through-holes 66, which are named as a first through-hole 66a and a second through-hole 66b respectively. The valve core disc 41 has two bore channels 411, which are named as a first bore channel 411a and a second bore channel 411b respectively. As shown in (a) of FIG. 11, in the first position of the valve core 4, the first matching part 43 abuts against the first position-limiting part 631, the first bore channel 411a is in communication with the first through-hole 66a, with an axis of the first bore channel 411a being coincided or substantially coincided with the axis of the first through-hole 66a, and the second bore channel 411b is entirely sealed by the sealing assembly 6. As shown in (b) of FIG. 11, in the second position of the valve core 4, the first matching part 43 abuts against the second position-limiting part 632, the second bore channel 411b is in communication with the second through-hole 66b, with the axis of the second bore channel 411b being coincided or substantially coincided with the axis of the second through-hole 66b, and a lower end of the first bore channel 411a is sealed by the sealing assembly 6. The first position-limiting part 631 and the second position-limiting part 632 of the notch 63 of the sealing assembly 6 limit the stroke of the first matching part 43, and then limit the rotation angle of the valve core 4, thereby completing valve initialization, that is, achieving alignment between the bore channel 411 and the through-hole 66 in the axial direction.

Referring to FIGS. 1 to 5, the valve body 5 includes a valve chamber 51 and an accommodation cavity 55. The accommodation cavity 55 is closer to the pressing member 29 than the valve chamber 51 in the axial direction of the electric valve. The pressing member 29 has an external thread, and the valve body 5 has an internal thread, enabling a threaded connection between the pressing member 29 and the valve body 5. The valve body 5 includes a stepped part 57. Specifically, the stepped part 57 is located between the accommodation cavity 55 and the valve chamber 51. The connecting seat 28 includes a sealing part 283, a second matching part 282 and a pressing part 281. A sealing gasket 33 is provided between the sealing part 283 and the stepped part 57, with one side of the sealing gasket 33 abutting against the sealing part 283 and the other side of the sealing gasket 33 abutting against the stepped part 57. The second matching part 282 matches with a side wall forming the accommodation cavity 55, and the pressing part 281 is in direct or indirect contact with the pressing member 29. The electric valve includes a position-limiting member 7, which is disposed between the connecting seat 28 and the wall forming the accommodation cavity 55 and abuts against the connecting seat 28 and the wall forming the accommodation cavity 55. The position-limiting member 7 is configured to limit the relative rotation between the connecting seat 28 and the valve body 5. In this embodiment, some structural improvements have been made to the connecting seat 28 and the valve chamber 51 of the valve body 5 in the valve assembly 2, that is, the position-limiting member 7 is additionally arranged between the connecting seat 28 and the wall forming the accommodation cavity 55. The position-limiting member 7 generates a significant static friction against the rotation of the connecting seat 28 relative to the valve body 5. The relative rotation between the connecting seat 28 and the valve body 5 needs to overcome this friction, thereby preventing the connecting seat 28 from causing the sealing gasket 33 to slide during the locking process of the sealing gasket 33, which could otherwise lead to issues of poor sealing performance of the sealing gasket 33.

In the first embodiment of the present application, the electric valve further includes a groove 70, and the position-limiting member 7 includes an elastic part 71. The groove 70 is located on at least one of the side wall forming the accommodation cavity 55 and the second matching part 282. In this embodiment, the groove 70 is located on the second matching part 282 of the connecting seat 28. The groove 70 may also be located on the side wall forming the accommodation cavity 55. At least a portion of the elastic part 71 is located in the groove 70. The elastic part 71 abuts against the side wall forming the accommodation cavity 55 and the second matching part 282. Consequently, any rotation of the connecting seat 28 relative to the valve body 5 should overcome the friction applied by the elastic part 71, thereby preventing the connecting seat 28 from causing the sealing gasket 33 to slide during the locking process of the sealing gasket 33, which could otherwise lead to a poor sealing performance. In addition, even if the friction applied by the elastic part 71 is insufficient to resist the rotation of the connecting seat 28 relative to the valve body 5, resulting in slight sliding of the sealing gasket 33, the elastic part 71 can still have a secondary sealing function.

Referring to FIG. 13, the difference between the second embodiment and the first embodiment of the present application lies in that the groove 70 is located on at least one of the sealing part 283 and the stepped part 57. In this embodiment, the groove 70 is located on the stepped part 57, and at least a portion of the elastic part 71 is located in the groove 70. The groove 70 may also be located on the sealing part 283 of the connecting seat 28. In the case that the elastic part 71 is arranged here, the friction exerted by the elastic part 71 may prevent the connecting seat 28 from rotating relative to the valve body 5 during the locking process of the sealing gasket 33, thereby avoiding the sealing gasket 33 from sliding slightly during the locking process. In addition, similar to the first embodiment of the present application, the elastic part 71 may also have a secondary sealing function in the second embodiment.

In order to prevent the rotation of the pressing member 29 from driving the connecting seat 28 to rotate during the entire process of the pressing member 29 pressing the connecting seat 28 (not just at the final locking stage), which may lead to the sliding of the sealing gasket 33, in some embodiments, the elastic part 71 located between the sealing part 283 and the stepped part 57 is further defined. Specifically, a surface of either the sealing part 283 or the stepped part 57 that abuts against the elastic part 71 is defined as a first surface S1, a surface of the elastic part 71 facing the first surface S1 is defined as a second surface S2, and a surface of the sealing part 283 that abuts against the sealing gasket 33 is defined as a third surface S3. In this embodiment, since the groove 70 is located on the stepped part 57 and a bottom wall of the sealing part 283 is planar, the bottom wall of the sealing part 283 includes the first surface S1 and the third surface S3, and a top wall of the elastic part 71 is the second surface S2. During the mounting process, a distance between the first surface S1 and the second surface S2 is smaller than a distance between a top wall of the sealing gasket 33 and the third surface S3. The above-mentioned constraints ensure that during the insertion of the connecting seat 28 into the accommodation cavity 55, the sealing part 283 of the connecting seat 28 has already abutted against the elastic part 71 before it abuts against the sealing gasket 33. When the sealing part 283 abuts against the sealing gasket 33, the elastic part 71 has already undergone a certain deformation. Consequently, if the connecting seat 28 attempts to rotate relative to the valve body 5, the friction force generated by the deformed elastic part 71 should be overcome, thereby ensuring that the connecting seat 28 would not cause the sealing gasket 33 to slide during the entire process of the pressing member 29 pressing the connecting seat 28.

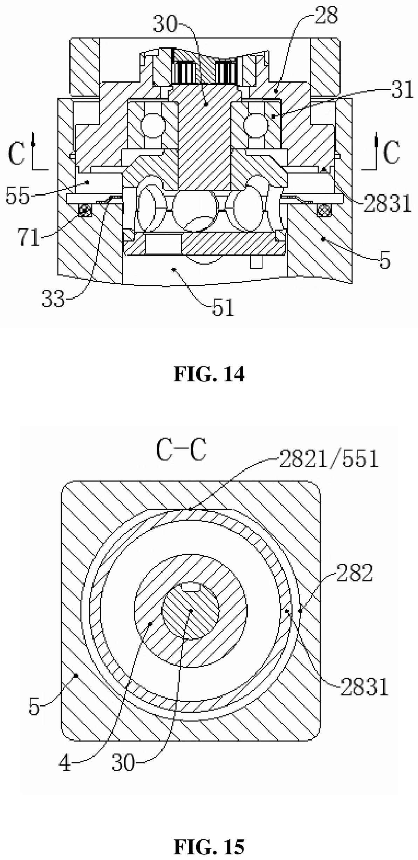

Referring to FIG. 14, in order to meet the above further constraints on the elastic part 71, it is necessary to select the elastic part 71with a relatively large thickness. Furthermore, in order to broaden the selection range and reduce costs, in some embodiments, an abutment part 2831 is additionally provided between the sealing part 283 and the stepped part 57, and the abutment part 2831 is connected to the stepped part 57 or the sealing part 283 in a fixed manner or in a position-limited manner. In this embodiment, the abutment part 2831 is a protrusion on the sealing part 283, and the abutment part 2831 is integrally formed with the sealing part 283. The abutment part 2831 is fitted into the groove 70, that is, the abutment part 2831 may extend into the groove 70. In this way, since the abutment part 2831 is on the sealing part 283, a bottom wall of the abutment part 2831 is the first surface S1, and the top wall of the elastic part 71 is the second surface S2. A cavity is enclosed by the abutment part 2831, and a top wall of the cavity is the third surface S3. The distance between the first surface S1 and the second surface S2 being smaller than the distance between the top wall of the sealing gasket 33 and the third surface S3 can be achieved by increasing the thickness of the abutment part 2831.

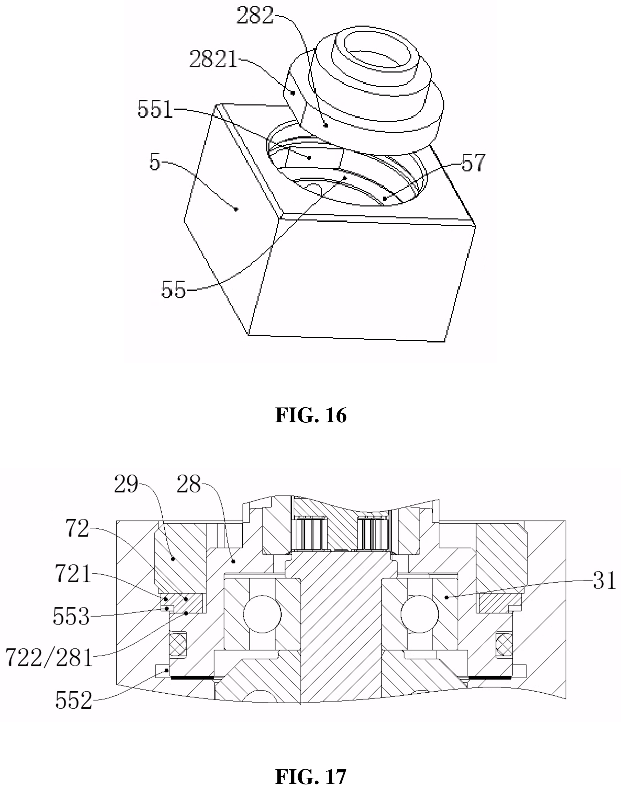

Further, referring to FIGS. 15 and 16, for the embodiment in which the elastic part 71 is disposed between the sealing part 283 and the stepped part 57, in order to further limit the relative rotation between the connecting seat 28 and the valve body 5, in some embodiments, a first position-limiting part 2821 is provided on the second matching part 282, and a second position-limiting part 551 is provided on the wall forming the accommodation cavity 55. The first position-limiting part 2821 is shape-matched with the second position-limiting part 551, so that the first position-limiting part 2821 and the second position-limiting part 551 are in close contact and are engaged with each other. In this embodiment, each of the first position-limiting part 2821 and the second position-limiting part 551 is planar, so that each of the second matching part 282 and the accommodation cavity 55 has a D-shaped cross-section. Alternatively, other shapes may be selected, or a key that is connected to the second matching part 282 and the wall forming the accommodation cavity 55 in a position-limited manner may be selected, so that at least a portion of the cross-section of each of the second matching part 282 and the accommodation cavity 55 is non-circular.

In the above embodiments, the position-limiting member 7 includes an elastic part 71, which has a damping effect on the rotation of the connecting seat 28. In addition to the above embodiments in which the position-limiting member 7 serves as a damper, the position-limiting member 7 may further include an anti-rotation member 72, so that the position-limiting member 7 may completely limit the position of the connecting seat 28. The specific embodiments are as follows.

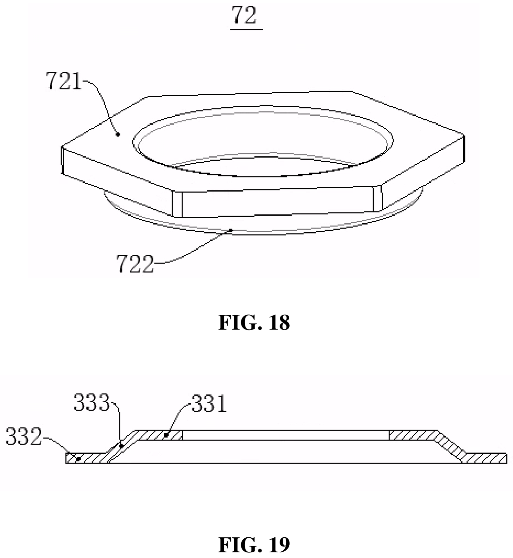

Referring to FIGS. 17 and 18, another embodiment of the present application is shown. Based on the above embodiment, an anti-rotation member 72 is additionally provided according to this embodiment. The accommodation cavity 55 includes a centering cavity 552 and a specially-shaped cavity 553, which is closer to the pressing member 29 than the centering cavity 552 in the axial direction of the electric valve. A wall surface defining the centering cavity 552 may have an arc-shaped structure, which facilitates limiting the mounting position of the connecting seat 28, and ensures the coaxial arrangement of the connecting seat 28 and the valve core 4. A wall surface defining the specially-shaped cavity 553 may have a non-arc-shaped structure. For example, as shown in FIG. 18, the wall surface defining the specially-shaped cavity may have a hexagonal structure. The anti-rotation member 72 includes a specially-shaped part 721 and a crimping part 722, which protrudes from a bottom wall of the specially-shaped part 721. At least a portion of the specially-shaped part 721 is located in the specially-shaped cavity 553. The specially-shaped part 721 abuts against the pressing member 29 and is engaged with a side wall forming the specially-shaped cavity 553. The crimping part 722 abuts against the pressing part 281. In this embodiment, the specially-shaped part 721 and the specially-shaped cavity 553 have same cross-sectional shapes, and they are dimensionally fitted with each other. As shown in FIG. 18, each of the specially-shaped part 721 and the specially-shaped cavity 553 has a uniform regular hexagon cross-section. Similarly, the cross-sectional shape is not limited to a regular hexagon, and any non-circular shape may meet the requirements. Before the pressing member 29 is threadedly connected to the valve body 5, the anti-rotation member 72 is placed into the accommodation cavity 55, the specially-shaped part 721 of the anti-rotation member 72 is engaged with the side wall forming the specially-shaped cavity 553, and the crimping part 722 abuts against the pressing part 281 of the connecting seat 28. The pressing member 29 is then rotated to press against the anti-rotation member 72, and in turn presses against the connecting seat 28, thereby locking the sealing gasket 33 in place. Through the above arrangement, during the manufacturing process of the valve device in the embodiment of the present application, after the anti-rotation member 72 is mounted, the pressing member 29 only generates friction that tends to drive the anti-rotation member 72 to rotate during the process of screwing the pressing member 29 into the valve body 5. However, the anti-rotation member 72 cannot rotate in the accommodation cavity 55 due to the shape limitation thereof. Since the anti-rotation member 72 and the end face of the connecting seat 28 may abut against each other, the connecting seat 28 cannot rotate under the influence of friction, thereby preventing the sealing gasket 33 from sliding.

Referring to FIG. 19, in some embodiments, the sealing gasket 33 is a Z-shaped sealing gasket, and the elastic part 71 is a sealing ring. The Z-shaped sealing gasket includes an inner ring part 331, an outer ring part 332 and a sloped part 333. The inner ring part 331 and the outer ring part 332 are located in different horizontal planes. Specifically, the inner ring part 331 is higher than the outer ring part 332, and they are connected to each other through the sloped part 333. This type of sealing gasket has a better sealing performance. Certainly, the sealing gasket 33 is not limited to the Z-shaped sealing gasket, and other types of sealing gaskets may be reasonably selected based on sealing requirements.

Further referring to FIG. 1, the valve assembly 2 is in transmission connection with the valve core 4. Specifically, the connecting seat 28 in the valve assembly 2 is connected to the valve stem 30 in a position-limited manner via a bearing 31. In this embodiment, an outer ring of the bearing 31 is in interference fit with the connecting seat 28, and an inner ring of the bearing 31 is in interference fit with an outer circumference of the valve stem 30. The valve stem 30 extends through the bearing 31 and is connected to the valve core 4 in a position-limited manner. Specifically, the valve stem 30 is in interference fit with the valve core 4. During the machining of the valve body 5, it is ensured that the central axis of the valve chamber 51 is coincided or substantially coincided with the central axis of the accommodation cavity 55. During the assembly of the valve core 4 and the machining of the connecting seat 28, it is ensured that the rotation axis of the valve core 4 is coincided or substantially coincided with the axis of the second matching part 282 of the connecting seat 28. In this way, after the connecting seat 28 is inserted into the accommodation cavity 55, the second matching part 282 is matched with and connected to the wall forming the accommodation cavity 55, ensuring the concentricity between the valve core 4 and the valve chamber 51. In this way, the matching between the second matching part 282 and the wall forming the accommodation cavity 55 is subject to tolerance limits. By placing the elastic part 71 between the second matching part 282 and the wall forming the accommodation cavity 55, uniform deformation of the elastic part 71 is achieved throughout, resulting in better secondary sealing performance.

An assembly method for an electric valve is further provided according to the present application, which is applied to assemble the electric valve described in any of the above embodiments. In conjunction with FIGS. 1 to 19, the assembly method for the electric valve in the embodiments of the present application includes following steps.

In S1, an electric valve is provided.

The electric valve is the one described in any of the above embodiments. Specifically, in this embodiment, the electric valve includes a pressing member 29, a sealing gasket 33, a valve assembly 2 and a valve body 5. The valve assembly 2 includes a connecting seat 28, and the valve body 5 includes an accommodation cavity 55. At least a portion of the connecting seat 28 is located in the accommodation cavity 55, and the pressing member 29 is threadedly connected to the valve body 5. The valve body 5 includes a stepped part 57, and the connecting seat 28 includes a sealing part 283 and a pressing part 281. One side of the sealing gasket 33 abuts against the sealing part 283, the other side of the sealing gasket 33 abuts against the stepped part 57, and the pressing part 281 is in direct or indirect contact with the pressing member 29. The electric valve further includes a position-limiting member 7.

In S2, the connecting seat 28, the sealing gasket 33 and the position-limiting member 7 are placed into the accommodation cavity 55 of the valve body 5, such that the position-limiting member 7 comes into contact with both the connecting seat 28 and the wall forming the accommodation cavity 55, the sealing gasket 33 is located between the sealing part 283 of the connecting seat 28 and the stepped part 57 of the valve body 5, and the sealing gasket 33 comes into contact with the stepped part 57.

Optionally, the electric valve includes a groove 70, the connecting seat 28 includes a second matching part 282, and the position-limiting member 7 includes an elastic part 71. The groove 70 is located on at least one of the side wall forming the accommodation cavity 55 and the second matching part 282, or the groove 70 is located on at least one of the sealing part 283 and the stepped part 57. At least a portion of the elastic part 71 is located in the groove 70.

In S3, the pressing member 29 is threadably connected to the valve body 5, such that the pressing member 29 abuts against the pressing part 281 of the connecting seat 28 and locks the sealing gasket 33 between the sealing part 283 and the stepped part 57.

Optionally, during the threaded connection of the pressing member 29 to the valve body 5, before the sealing part 283 abuts against the sealing gasket 33, the elastic part 71 first abuts against the connecting seat 28 and the wall forming the accommodation cavity 55, which ensures that during the insertion of the connecting seat 28 into the accommodation cavity 55, the elastic part 71 has already undergone a certain deformation before the sealing part 283 of the connecting seat 28 abuts against the sealing gasket 33. Consequently, if the connecting seat 28 attempts to rotate relative to the valve body 5, the friction generated by the elastic part 71 should be overcome, thereby ensuring that the connecting seat 28 may not cause the sealing gasket 33 to slide during the entire pressing process of the pressing member 29 against the connecting seat 28. In addition, even if the friction applied by the elastic part 71 is insufficient to resist the rotation of the connecting seat 28 relative to the valve body 5, which results in slight sliding of the sealing gasket 33, the elastic part 71 can still have a secondary sealing function.

Furthermore, the electric valve further includes an anti-rotation member 72. The accommodation cavity 55 includes a centering cavity 552 and a specially-shaped cavity 553, which is closer to the pressing member 29 than the centering cavity 552 in the axial direction of the electric valve. A wall surface defining the centering cavity 552 may have an arc-shaped structure, which facilitates limiting the mounting position of the connecting seat 28, and ensures the coaxial arrangement of the connecting seat 28 and the valve core 4. A wall surface defining the specially-shaped cavity 553 may have a non-arc-shaped structure. For example, as shown in FIG. 18, the wall surface defining the specially-shaped cavity may have a hexagonal structure. The anti-rotation member 72 includes a specially-shaped part 721 and a crimping part 722, and at least a portion of the specially-shaped part 721 is located in the specially-shaped cavity 553. Before the pressing member 29 is threadedly connected to the valve body 5, the anti-rotation member 72 is placed into the accommodation cavity 55, the specially-shaped part 721 of the anti-rotation member 72 is engaged with the side wall forming the specially-shaped cavity 553, and the crimping part 722 abuts against the pressing part 281 of the connecting seat 28. The pressing member 29 is then rotated to press against the anti-rotation member 72, and in turn presses against the connecting seat 28, thereby locking the sealing gasket 33 in place. After the anti-rotation member 72 is additionally provided, during the process of screwing the pressing member 29 into the valve body, only friction that would drive the anti-rotation member 72 to rotate is generated. However, the anti-rotation member 72 cannot rotate in the accommodation cavity 55 due to its shape limitation, so the connecting seat 28 cannot rotate under the influence of the friction, thereby preventing the sealing gasket 33 from sliding.

Further referring to FIGS. 1 and 2, the connecting seat 28 is connected to the valve body 5 in a fixed manner or in a position-limited manner. The bearing 31 includes a first component 311 and a second component 312. The first component 311 is connected to the valve core assembly 3 in a fixed manner or in a position-limited manner, either directly or indirectly. The second component 312 is connected to the connecting seat 28 in a fixed manner or in a position-limited manner. A force exerted on the valve core assembly 3 towards the valve assembly 2 is defined as a positive force, and a force exerted on the valve core assembly 3 towards the bottom wall forming the valve chamber 51 is defined as a reverse force. The bearing 31 may bear both the positive force and the reverse force exerted on the valve core assembly 3. In this embodiment, the connecting seat 28 and the valve body 5 are pressed together by the pressing member 29, which is threadedly connected to the valve body 5. The bearing 31 is positioned around the valve stem 30. The bearing 31 is a deep groove ball bearing. The first component 311 of the bearing 31 is an inner ring of the bearing, and the second component 312 is an outer ring of the bearing. The inner ring of the bearing 31 is in interference fit with the valve stem 30, and the outer ring of the bearing 31 is in interference fit with the connecting seat 28. Certainly, if the bearing 31 adopts other types of bearings with bidirectional axial load-bearing capacity, it is only necessary to meet the relative position limitation between the first component 311 and the valve core 4, and the relative position limitation between the second component 312 and the valve body 5 or the valve assembly 2. In such cases, the first component 311 may alternatively be the outer ring of the bearing, and the second component 312 may be the inner ring of the bearing. Specifically, a mounting cavity 280 is enclosed by the connecting seat 28, and the wall forming the mounting cavity 280 includes a side wall, which is in interference fit with the outer ring of the bearing 31. In addition, the valve stem 30 is connected to the valve core 4 in a fixed manner or in a position-limited manner, so that the position of the valve core 4 in the valve chamber 51 may be limited by the bearing 31. Consequently, when the valve core 4 is pressed in a positive direction or a reverse direction, the axial displacement of the valve core 4 is completely determined by the axial displacement of the bearing, and the axial displacement of the bearing 31 may be adjusted to a certain extent by adjusting internal clearance of the bearing and the total interference of the inner and outer rings, theoretically enabling the achievement of zero axial displacement.

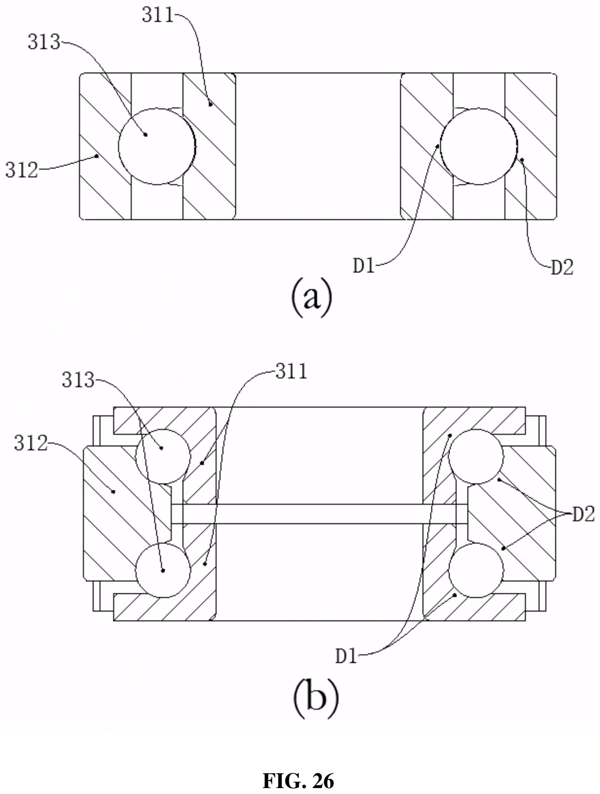

Referring to FIG. 26, the bearing 31 further includes transmission components 313. The first component 311 includes a first abutment part D1, and the second component 312 includes a second abutment part D2. The transmission components 313 abut against the first abutment part D1 and the second abutment part D2 respectively. In order to ensure that the bearing 31 may bear the positive force and the reverse force exerted on the valve core assembly 3, in the axis of the bearing 31, at least a portion of the first abutment part D1 and at least a portion of the second abutment part D2 are closer to the bottom wall forming the valve chamber 51 than the transmission components 313, and at least a portion of the first abutment part D1 and at least a portion of the second abutment part D2 are farther away from the bottom wall forming the valve chamber 51 than the transmission components 313. In this way, the portion of the first abutment D1 that is closer to the bottom wall of the valve chamber 51 than the transmission components 313 and the portion of the second abutment D2 that is farther away from the bottom wall of the valve chamber 51 than the transmission components 313 enable the bearing 31 to bear the reverse force exerted on the valve core assembly 3. The portion of the first abutment D1 that is farther away from the bottom wall of the valve chamber 51 than the transmission components 313 and the portion of the second abutment D2 that is closer to the bottom wall of the valve chamber 51 than the transmission components 313 enable the bearing 31 to bear the positive force exerted on the valve core assembly 3. Consequently, when the valve core 4 is pressed in a positive direction or a reverse direction, the axial displacement of the valve core 4 is completely determined by the axial displacement of the bearing, and the axial displacement of the bearing 31 may be adjusted to a certain extent by adjusting the internal clearance of the bearing and the total interference of the inner and outer rings, theoretically enabling the achievement of zero axial displacement. The bearing 31 may be a deep groove ball bearing as shown in (a) of FIG. 26, or a bidirectional thrust angular contact ball bearing as shown in (b) of FIG. 26. Alternatively, two unidirectional thrust bearings may be arranged back-to-back to meet the requirement of the bidirectional axial load capacity.

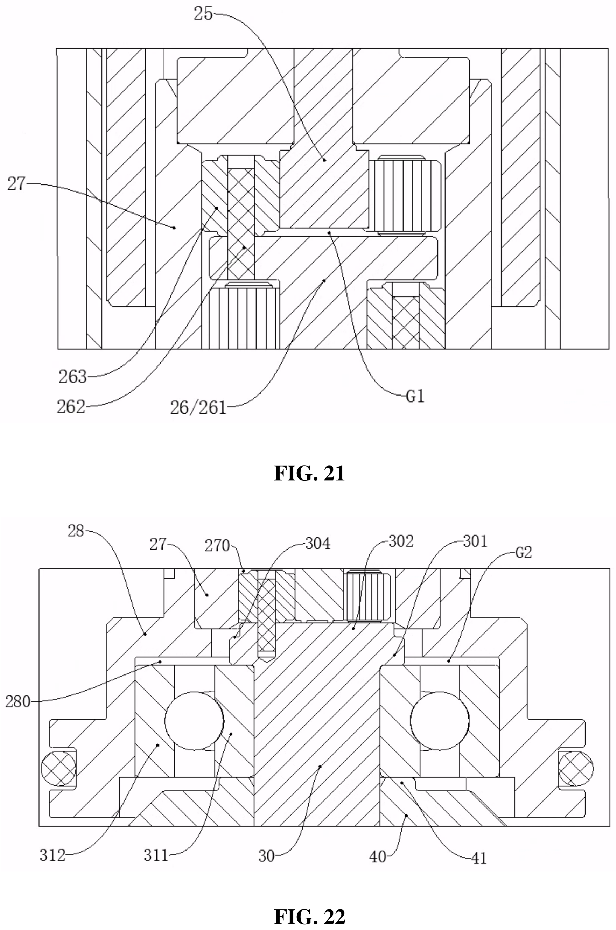

Referring to FIGS. 21 and 22, in order to facilitate the mounting and height adjustment of the valve core 4, a certain axial adjustment margin is provided for the transmission assembly 24 inside the valve assembly 2. Specifically, the sun gear 25 is connected to the fixed ring gear 27 in a fixed manner or in a position-limited manner via the fixing member 23. The fixed ring gear 27 has a transmission cavity 270, in which the planetary gear train 26 below the sun gear 25 may move up and down. A first gap G1 is formed between the sun gear 25 and the planetary carrier 261 of the first-stage planetary gear train, and an upper portion of the valve stem 30 serves as the planetary carrier of the output gear train. Therefore, the valve stem 30 has an upward adjustment margin equal to the dimension of the first gap G1 along the axial direction of the electric valve. As shown in FIG. 22, in the axial direction of the electric valve, the mounting cavity 280 has a depth greater than a thickness of the bearing 31. Therefore, a second gap G2 is formed between the top wall of the mounting cavity 280 and the top wall of the bearing 31. It can be seen that the upward adjustment margin for the bearing 31 is equal to the dimension of the second gap G2. In order to meet the adjustment margin for the bearing 31, it is required that the dimension of the first gap G1 is greater than or equal to the dimension of the second gap G2 in the axial direction of the electric valve. In this way, when the top wall of the bearing 31 abuts against the top wall of the mounting cavity 280, the gear transmission of the transmission assembly 24 above the valve stem 30 will not be stuck. The mounting depth of the bearing 31 in the mounting cavity 280 depends on the degree of abutment between the valve core 4 and the sealing assembly 6 at the bottom wall of the valve chamber 51, specifically the degree of deformation of the sealing assembly 6 when the valve core 4 abuts against the sealing assembly 6. If the deformation of the sealing assembly 6 is excessive, the bottom wall of the valve core 4 rotates and rubs against the top wall of the sealing assembly, which may adversely affect the service life of the sealing assembly and increase the difficulty of opening the valve. To address this issue, the bearing 31 may be further pressed into the mounting cavity 280, so that the bearing 31 drives the valve stem 30 and the valve core 4 to move upwardly by a certain distance, thereby ensuring that the deformation of the sealing assembly meets the requirements. Conversely, if the deformation of the sealing assembly is insufficient, the sealing performance will be reduced. In this case, the bearing 31 in the mounting cavity 280 may be moved downwardly by a certain distance to drive the valve core 4 to move downwardly, ensuring that the sealing assembly has good sealing performance.

Referring to FIGS. 22 to 24, the valve stem 30 includes a position-limiting part 301, a third matching part 302 and a stepped part 304. In the axial direction of the electric valve, a distance between a top wall of the stepped part 304 and a bottom wall of the fixed ring gear 27 is greater than or equal to the dimension of the first gap G2. This arrangement ensures that when the top wall of the bearing 31 abuts against the top wall of the mounting cavity 280, the stepped part 304 will not be stuck against the bottom wall of the fixed ring gear 27.

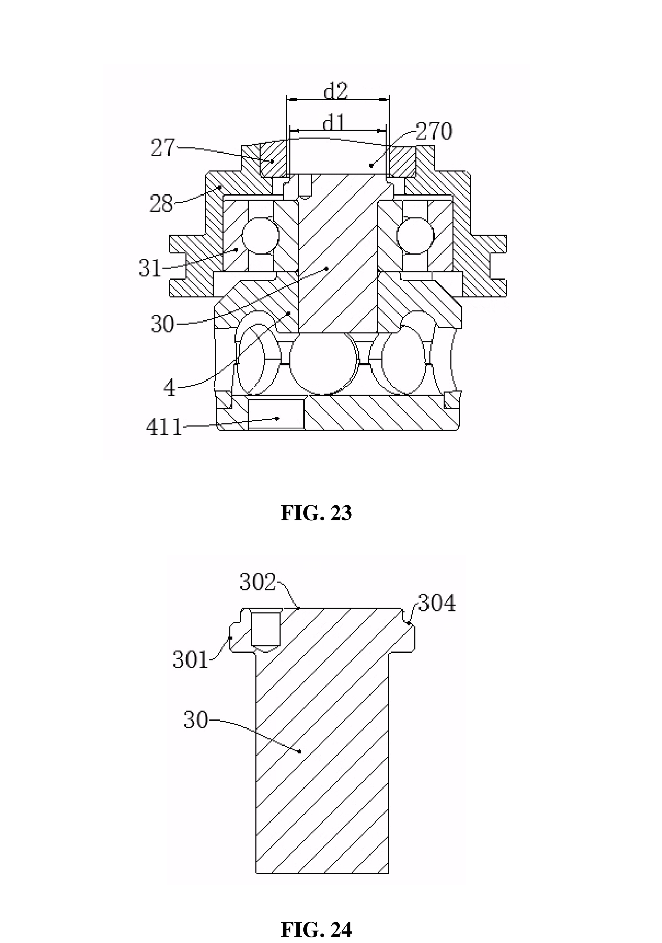

Referring to FIG. 23, in order to ensure the structural compactness and the transmission stability of the electric valve, the third matching part 302 at the upper portion of the valve stem 30 serving as the planetary carrier of the output gear train is generally positioned in close proximity to the fixed ring gear 27. In some cases, a portion of the third matching part 302 even extends into the transmission cavity 270 of the fixed ring gear 27. Therefore, to enable vertical adjustment of the valve stem 30, it is necessary to meet the following requirements: a radial dimension d1 of the third matching part 302 is less than an inner diameter dimension d2 of the fixed ring gear 27, allowing the third matching part 302 to move into the transmission cavity 270.

Referring to FIG. 22, the valve core 4 includes a valve core body 40 and an abutment part 41, which protrudes from a top wall of the valve core body 40. The valve core 4 is in interference fit with the valve stem 30. One side of the inner ring of the bearing 31 abuts against the abutment part 41, and the other side of the inner ring of the bearing 31 abuts against the position-limiting part 301.

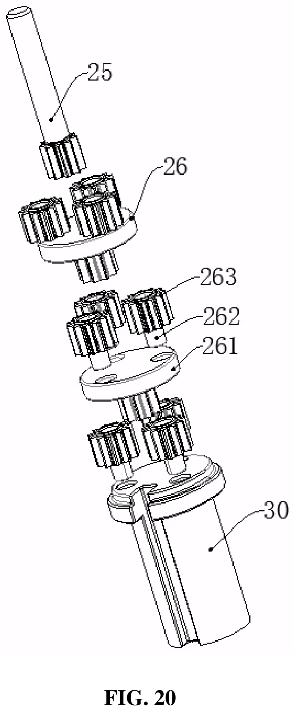

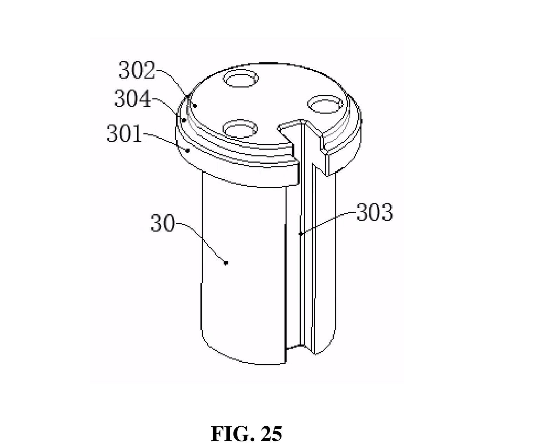

Referring to FIGS. 3, 20 and 25, the valve assembly 2 has an accommodation cavity 200. The valve stem 30 has a balancing hole 303 that extends through an entire axial length thereof, and the bearing 31 is located around the outer circumference of the valve stem 30. The balancing hole 303 is communicated with the channel 42 in the valve core 4 and the accommodation cavity 200. Considering that the bearing 31 has a sealing cover, when there is a large instantaneous pressure in the channel 42 of the valve core 4, the valve core 4 may be subjected to an upward impact force, which is likely to cause the bearing 31 to rupture. To address the issue, by additionally providing the balancing hole 303 in the valve stem 30, the high-pressure fluid is introduced from the channel 42 into the accommodation cavity 200 through the balancing hole 303, so that the high pressure will be instantly balanced at the upper and lower ends of the bearing 31, thereby preventing the bearing 31 from being subjected to an upward impact force and avoiding potential damage to the bearing.

Referring to FIGS. 1 to 4, the valve body 5 includes at least two second communication ports 53. The valve core 4 is rotatable relative to the valve body 5, such that the channel 42 may be selectively communicated with one or more of the second communication ports 53 or not communicated with any of the second communication ports 53. Each of the second communication ports 53 includes an axial hole 531 and a radial hole 532. The axial hole 531 is located in the bottom wall forming the valve chamber 51 and is communicated with the through-hole 66, and an axis of the axial hole 531 is coincided or substantially coincided with the axis of the through-hole 66. The radial hole 532 is located on the side surface of the bottom of the valve body 5 and is communicated with the axial hole 531, and an axis of the radial hole 532 is perpendicular or substantially perpendicular to the axis of the axial hole 531. The channel 42 of the valve core 4 includes a bore channel 411, which is located at the bottom of the valve core 4, and the axial hole 531 is communicated with the bore channel 411. In some embodiments, there are two second communication ports 53, and accordingly, the sealing assembly 6 has two through-holes 66, which are communicated with a first-second communication port P1 and a second-second communication port P2, respectively.

In the above type of the electric valve, when the high-pressure fluid flows through the first communication port 52, one of the second communication ports 53 is blocked by the bottom wall of the valve core 4. A pressure difference is established in the channel 42 of the valve core 4 due to pressure imbalance, and the valve core 4 is subjected to a downward pressure on the side where the blocked second communication port 53 is located. Conversely, when the high-pressure fluid flows through the second communication port 53 that is blocked by the bottom wall of the valve core 4, a pressure is exerted on the bottom wall of the valve core 4, causing the valve core 4 to be subjected to an upward force. In the conventional electric valve, the valve core 4 is subjected to the upward force or downward force as described above, which may cause axial displacement of the valve core 4. In this embodiment, however, the position of the valve core 4 is limited by the bearing 31 with bidirectional axial load-bearing capacity, addressing the issue of axial movement. This arrangement avoids the issues of large friction and high difficulty in opening the valve that occur when the valve core moves downwardly and comes into contact with the top wall of the sealing assembly. Additionally, this arrangement avoids the issue of poor sealing performance that arises when the valve core moves upwardly, resulting in insufficient compression of the sealing assembly by the bottom wall of the valve core.

Furthermore, the application environment of the electric valve should be considered in the selection of the bearing 31. The bearing should be made of rust-proof material and oil-free assembly, and may be made of stainless steel or bearing steel. Since the rotation speed of the valve core column is relatively low, far below the rated speed of the bearing, only static load verification may be performed when considering the life of the bearing, without considering temperature rise and other factors. Considering the cost and bearing volume issues, in conclusion, the bearings in this embodiment should be an oil-free deep groove ball bearings made of bearing steel with low cost and small volume.

**It** should be noted that the above embodiments are only used to illustrate the present application and are not intended to limit the technical solutions described in the present application, for example, the directional definitions such as "front", "rear", "left", "right", "upper" and "lower". Although the present application has been described in this specification with reference to the above embodiments, it should be understood by those skilled in the art that modifications, combinations, or equivalent substitutions can still be made to the present application, and all technical solutions and improvements thereof that do not depart from the spirit and scope of the present application should fall within the scope of the claims of the present application.

## Claims

1. A valve device, comprising a sealing assembly (6), a valve core assembly (3) and a valve body (5), wherein
the valve body (5) has a valve chamber (51), a first communication port (52) and a second communication port (53), the valve core assembly (3) comprises a valve core (4) having a channel (42), at least a portion of the valve core (4) is located in the valve chamber (51), and the valve core (4) is rotatable relative to the valve body (5), so that the channel (42) is or is not communicated with the first communication port (52) and is or is not communicated with the second communication port (53); and
the sealing assembly (6) is connected to the valve body (51) in a fixed manner or in a position-limited manner, a bottom wall of the valve core (4) abuts against the sealing assembly (6), the sealing assembly (6) has a through-hole (66), which is communicated with the second communication port (53), the sealing assembly (6) comprises a first position-limiting part (631) and a second position-limiting part (632), and the valve core (4) comprises a first matching part (43), with the first matching part (43) being configured to abut against the first position-limiting part (631) when the valve core (4) is in a first position, and abut against the second position-limiting part (632) when the valve core (4) is in a second position.

2. The valve device according to claim 1, wherein the valve device has a position-limiting cavity (601), walls forming the position-limiting cavity (601) comprise a first end wall (601a) and a second end wall (601b), which are located in the sealing assembly (6), the first position-limiting part (631) is located at the first end wall (601a), and the second position-limiting part (632) is located at the second end wall (601b); and
the first matching part (43) protrudes from the bottom wall of the valve core (4).

3. The valve device according to claim 2, wherein the sealing assembly (6) comprises a notch (63), the walls forming the position-limiting cavity (601) comprise a side wall forming the valve chamber (51) and the notch (63), and the first matching part (43) is a limiting pin, which is connected to the valve core (4) in a fixed manner or in a position-limited manner.

4. The valve device according to claim 1, wherein the sealing assembly (6) comprises a position-limiting member (63'), which protrudes from a top wall of the sealing assembly (6) and comprises a first position-limiting part (631) and a second position-limiting part (632); and
wherein the first matching part (43) has a matching cavity (43'), which is recessed relative to the bottom wall of the valve core (4), and walls forming the matching cavity (43') comprises a first matching wall (431) and a second matching wall (432), the first matching wall (431) is configured to abut against the first position-limiting part (631) when the valve core (4) is in a first position, and the second matching wall (432) is configured to abut against the second position-limiting part (632) when the valve core (4) is in a second position.

5. The valve device according to any one of claims 1 to 4, wherein the sealing assembly (6) comprises a sealing body (60) and a sealing member (62), the first position-limiting part (631) and the second position-limiting part (632) are located on the sealing body (60), the sealing body (60) has an accommodation cavity (61), in which the sealing member (62) is located, one side wall of the sealing member (62) abuts against the bottom wall of the valve core (4), and the other side wall of the sealing member (62) abuts against a bottom wall forming the valve chamber (51), and the sealing member (62) has the through-hole (66).

6. The valve device according to claim 5, wherein the sealing member (62) comprises a sealing seat (621) and a sealing ring (622), at least a portion of the sealing seat (621) is located in the accommodation cavity (61), the sealing seat (621) abuts against the bottom wall of the valve core (4), one side wall of the sealing ring (622) abuts against a bottom wall of the sealing seat (621), and the other side wall of the sealing ring (622) abuts against the bottom wall forming the valve chamber (51).

7. The valve device according to claim 6, wherein the second communication port (53) comprises an axial hole (531) and a radial hole (532), the axial hole (531) is communicated with the through-hole (66), an axis of the axial hole (531) is coincided or substantially coincided with an axis of the through-hole (66), the radial hole (532) is communicated with the axial hole (531), and an axis of the radial hole (532) is perpendicular or substantially perpendicular to the axis of the axial hole (531).

8. The valve device according to claim 7, wherein the sealing member (62) further comprises a connector (623), at least a portion of the connector (623) is located in the axial hole (531), and at least a portion of the connector (623) is located in the accommodation cavity (61);
the sealing ring (622) is located on an outer peripheral side of the connector (623), and the connector (623) is in an interference fit with the axial hole (531); and
there is a gap between a surface of the connector (623) facing the valve core (4) and the bottom wall of the sealing seat (621).

9. The valve device according to any one of claims 1 to 8, wherein the valve core (4) comprises a valve core body (40) and a valve core disc (41), which is connected to a bottom end of the valve core body (40) in a fixed manner or in a position-limited manner, and the first matching part (43) is located on a bottom wall of the valve core disc (41).

10. The valve device according to claim 9, wherein the valve core body (40) has a valve core chamber (400) and a communication hole (401), which enables communication between the first communication port (52) and the valve core chamber (400);
the valve core disc (41) has bore channels (411), which are communicated with the valve core chamber (400), in the first position and the second position of the valve core (4), an axis of one of the bore channels (411) is coincided or substantially coincided with the axis of the through-hole (66), and the other bore channel or the other bore channels (411) are blocked by the sealing assembly (6).

11. The valve device according to any one of claims 1 to 10, wherein the valve device further comprises a pressing member (29), a sealing gasket (33) and a valve assembly (2), the valve assembly (2) comprises a connecting seat (28), the valve body (5) comprises an accommodation cavity (55), at least a portion of the connecting seat (28) is located in the accommodation cavity (55), the pressing member (29) is threadedly connected to the valve body (5), and the valve body (5) comprises a stepped part (57);
the connecting seat (28) comprises a sealing part (283) and a pressing part (281), wherein one side of the sealing gasket (33) abuts against the sealing part (283), the other side of the sealing gasket (33) abuts against the stepped part (57), and the pressing part (281) is in direct or indirect contact with the pressing member (29); and
the valve device further comprises a position-limiting member (7), which abuts against the connecting seat (28) and the wall forming the accommodation cavity (55).

12. The valve device according to claim 11, wherein the valve device comprises a groove (70), the position-limiting member (7) comprises an elastic part (71), the groove (70) is located on at least one of the sealing part (283) and the stepped part (57), at least a portion of the elastic part (71) is located in the groove (70), the elastic part (71) abuts against both the sealing part (283) and the stepped part (57), the sealing part (283) comprises an abutment part (2831), which protrudes from the sealing part (283), the groove (70) is located on the stepped part (57), and the abutment part (2831) abuts against the elastic part (71); and/or
the valve device comprises a groove (70), the connecting seat (28) comprises a second matching part (282), the position-limiting member (7) comprises an elastic part (71), the groove (70) is located on at least one of the side wall forming the accommodation cavity (55) and the second matching part (282), at least a portion of the elastic part (71) is located in the groove (70), and the elastic part (71) abuts against both the side wall forming the accommodation cavity (55) and the second matching part (282).

13. The valve device according to claim 12, wherein a surface of the sealing part (283) or the stepped part (57) that is configured to abut against the elastic part (71) is defined as a first surface (S1), a surface of the elastic part (71) facing the first surface (S1) is defined as a second surface (S2), and a surface of the sealing part (283) that is configured to abut against the sealing gasket (33) is defined as a third surface (S3), and during a mounting process, a distance between the first surface (S1) and the second surface (S2) is smaller than a distance between a top wall of the sealing gasket (33) and the third surface (S3).

14. The valve device according to any one of claims 1 to 13, wherein the valve device comprises a valve assembly (2) and a bearing (31), the valve assembly (2) is in transmission connection with the valve core assembly (3), the wall forming the valve chamber (51) comprises a bottom wall, and the second communication port (53) is located in the bottom wall;
the valve assembly (2) comprises a connecting seat (28), which is connected to the valve body (5) in a fixed manner or in a position-limited manner, and the bearing (31) comprises a first component (311) and a second component (312), wherein the first component (311) is connected to the valve core assembly (3) in a fixed manner or in a position-limited manner, the second component (312) is connected to the connecting seat (28) in a fixed manner or in a position-limited manner, a force exerted on the valve core assembly (3) towards the valve assembly (2) is defined as a positive force, a force exerted on the valve core assembly (3) towards a bottom wall forming the valve chamber (51) is defined as a reverse force, and the bearing (31) is configured to bear the positive force and the reverse force exerted on the valve core assembly (3).

15. The valve device according to claim 14, wherein the bearing (31) further comprises transmission components (313), the first component (311) comprises a first abutment part (D1), the second component (312) comprises a second abutment part (D2), and the transmission components (313) abut against the first abutment part (D1) and the second abutment part (D2) respectively; and
in an axis of the bearing (31), at least a portion of the first abutment part (D1) and at least a portion of the second abutment part (D2) are closer to the bottom wall forming the valve chamber (51) than the transmission components (313), and at least a portion of the first abutment part (D1) and at least a portion of the second abutment part (D2) are farther away from the bottom wall forming the valve chamber (51) than the transmission components (313).
